(19) **Europäisches Patentamt European Patent Office Office européen des brevets**

(11) **EP 4 443 101 A1**

(12) **EUROPEAN PATENT APPLICATION**

(43) Date of publication:
**09.10.2024   Bulletin 2024/41**

(21) Application number: **23166396.4**

(22) Date of filing: **03.04.2023**

(51) International Patent Classification (IPC):
**G01B 9/02001** (2022.01)   **G01B 9/02055** (2022.01)

(52) Cooperative Patent Classification (CPC):
**G01B 9/02067; G01B 9/02007; G01J 9/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Nederlandse Organisatie voor toegepast-natuurwetenschappelijk Onderzoek TNO**
  **2595 DA 's-Gravenhage (NL)**

• **Technische Universiteit Delft**
  **2628 CN Delft (NL)**

(72) Inventors:
• **BIEMOND, Jan Jacobus Benjamin**
  **2595 DA 's-Gravenhage (NL)**
• **MESKERS, Adrianus Johannes Hendricus**
  **2595 DA 's-Gravenhage (NL)**
• **KOEK, Wouter Dick**
  **2595 DA 's-Gravenhage (NL)**

(74) Representative: **V.O.**
  **P.O. Box 87930**
  **2508 DH Den Haag (NL)**

(54) **A METHOD AND SYSTEM FOR ESTIMATING A RELATIVE PHASE DIFFERENCE BETWEEN LIGHT BEAMS**

(57)    A method and system for estimating a relative phase difference between a first light beam and a second light beam guided through a shared optical path, the first light beam having a first wavelength and the second light beam having a second wavelength different from the first wavelength, wherein one or more measurements are performed to measure a value indicative of the physical pathlength variation, and wherein the relative phase difference between the first light beam and the second light beam at a predetermined location of the optical path is determined based on the value indicative of the physical pathlength variation.

FIG 2

**Description**

FIELD OF THE INVENTION

The invention relates to a method and system for estimating a relative phase difference between a first light beam and a second light beam guided through a shared optical path. Furthermore, the invention relates to a method and system of controlling optical signals. Also, the invention relates to a method and system for compensating said phase difference between optical signals defining an optical path.

BACKGROUND TO THE INVENTION

Estimating a relative phase difference between two light beams guided through a common/shared optical path is an important task in various fields such as interferometry, quantum interference, optical communication, quantum communication, optical sensing, etc. The relative phase difference between two beams can provide valuable information in various applications.

In the prior art, this relative phase difference can be estimated using interferometric techniques, such as Mach-Zehnder interferometry, Michelson interferometry, or Fabry-Perot interferometry. These techniques involve splitting the two beams, directing them along different paths, and then recombining them to observe interference patterns. In these examples, the relative phase difference is indicative of a physical property in the non-overlapping paths. The relative phase difference between the two beams can be estimated by analyzing the resulting interference patterns. However, in other cases, the phase difference may be essentially caused by the wavelength mismatch, not by the path mismatch. There is a strong need to better handle such cases in which the phase difference is caused by the wavelength mismatch.

For example, a good determination or estimation of the relative phase difference acquired between light with two different wavelengths guided through the same optical paths is needed in various optical synchronization or quantum interference systems. In optical synchronization or quantum interference problems, for instance, the phase of one optical wavelength may be measured, whereas the phase of the second channel is unknown and needs to be determined/estimated and subsequently compensated. Compensation of the second wavelength's phase enables (quantum) interferometry or synchronization at that wavelength.

There is a strong desire to provide for methods and systems that enable quantum interference or phase synchronization even if relatively long optical fibers are present in the optical path. In some solutions, a complete runtime compensation may be performed which may require new hardware and may be limited in range. There is a need to provide for a solution that requires limited new hardware, and preferably enables to perform synchronization in a wide range.

SUMMARY OF THE INVENTION

It is an object of the invention to provide for a method and a system that obviates at least one of the above mentioned drawbacks.
Additionally or alternatively, it is an object of the invention to improve a determination/estimation of phase difference between two optical wavelengths through the same optical channel.
Additionally or alternatively, it is an object of the invention to improve the ability for compensation of said phase difference to enable (quantum) interferometry or phase synchronization between two optical channels at the desired wavelength with improved dynamic range.
Thereto, the invention provides for a method for estimating a relative phase difference between a first light beam and a second light beam guided through a common optical path, the first light beam having a first wavelength and the second light beam having a second wavelength different from the first wavelength, wherein one or more measurements are performed to measure a value indicative of the physical pathlength variation, and wherein the relative phase difference between the first light beam and the second light beam at a predetermined location of the optical path is determined based on the value indicative of the physical pathlength variation.
The relative phase variation between the first light beam and the second light beam can be induced by an optical pathlength variation that are determined according to the method of the disclosure. The optical pathlength variation can be estimated or measured in different ways. The determination of the optical pathlength variation can be used for optical synchronization for instance. Advantageously, the optical synchronization can be performed without employing direct error measurements at the wavelength where synchronization is needed.
The method of the disclosure enables to perform phase compensation on both light beams simultaneously, based on the relative phase difference between a first light beam and a second light beam with an improved dynamic range. Furthermore, the method enables to perform the synchronization with a limited hardware complexity, for example compared to synchronization by performing compensation of runtime.
The method of the disclosure enables phase synchronization and/or quantum interference for longer optical paths/distances. As a result, for example, quantum interference can be obtained for longer distances, enabling various quantum tech applications.
If a phase difference between an upstream location of the optical path and a downstream location of the optical path is determined for a certain light beam with a preset wavelength (e.g. first wavelength), then based on the phase difference between the phase at the upstream location and the phase at the downstream location, the phase difference between the upstream and downstream location of a different light beam with a different wavelength (e.g. second wavelength) can be determined on the basis of the path length variation.

Optionally, the value indicative of the physical pathlength variation is determined by measuring an optical path delay of the optical path.

In some examples, a time is determined for the light beam to get from a begin point of the optical path to an end point of the optical path.

Optionally, the value indicative of the physical pathlength variation is determined by measuring a roundtrip time of the optical path.

In some examples, a time is determined for a light beam to go back and forth along the optical path, i. e. a roundtrip time. This may in some cases be easier to determine than measuring the optical path delay. Data indicative of the roundtrip time of the optical path may be available/reported in existing specifications of the utilized hardware set-up.

Optionally, a third light beam with a third wavelength being different from the first and second wavelengths is guided through the optical path, and wherein the value indicative of the physical pathlength is determined based on a relative phase difference between the third light beam and a further light beam guided through the optical path.

Instead of performing time measurements, phase difference measurements can be performed for instance using by interfering both light signals on a photodetector. Measuring a phase difference can be easier than measuring a time difference.

Optionally, the further light beam is a fourth light beam additionally guided through the optical path, wherein the fourth light beam has a wavelength different from the first, second and third wavelengths.

Optionally, the further light beam corresponds to the first light beam or the second light beam.

In some examples, instead of using two additional light beams with a different wavelength, for example a third light beam with a third wavelength and a fourth light beam with a fourth wavelength, it is also possible to omit one of the additional light beams and instead only use one additional light beam, i.e. the third light beam, by choosing the fourth light beam to correspond to the first light beam with the first wavelength.

Optionally, relative phase difference variation $\Delta\phi(t)$ is calculated based on the following relationship:

$$\Delta\phi(t) = 2\pi \left( \frac{n_1}{\lambda_1} - \frac{n_2}{\lambda_2} \right) \Delta L(t),$$

wherein $n_1$, $n_2$ are the optical indices of medium at the first and second wavelengths $\lambda_1, \lambda_2$, respectively, and $\Delta L(t)$ is the physical pathlength variation.

Optionally, an optical path delay variation $\Delta T(t)$ is measured at wavelength $\lambda_{forward}$ such as to determine the physical pathlength variation $\Delta L(t)$ based on the fol-

lowing relationship:

$$\Delta L(t) = \frac{c}{n_{forward}} \Delta T(t),$$

wherein $n_{forward}$ is an optical index at wavelength $\lambda_{forward}$. c corresponds to the speed of light. The total optical path delay in the optical path can be a mean or nominal term (which remains constant) plus a variation (from said mean or nominal term). The constant term can be relatively large and the time-varying term (variation) can be substantially smaller relative to said constant term. According to the method of the disclosure, values indicative of the optical path delay variation $\Delta T(t)$ may be measured.

Optionally, a roundtrip time variation $\Delta T^{rt}(t)$ is measured at wavelengths $\lambda_{forward}, \lambda_{backward}$ such as to determine the physical pathlength variation $\Delta L(t)$ based on the following relationship:

$$\Delta L(t) = \frac{c}{n_{forward} + n_{backward}} \Delta T^{rt}(t)$$

wherein $n_{forward}, n_{backward}$ are optical indices at wavelengths $\lambda_{forward}, \lambda_{backward}$.

Optionally, the physical pathlength variation is determined based on at least one of the following relationships:

$$\Delta L(t) = \frac{\Delta\phi_{34}(t)}{2\pi \left( \frac{n_3}{\lambda_3} - \frac{n_4}{\lambda_4} \right)},$$

$$\Delta L(t) = \frac{\Delta\phi_{31}(t)}{2\pi \left( \frac{n_3}{\lambda_3} - \frac{n_1}{\lambda_1} \right)},$$

wherein $\lambda_1, \lambda_3, \lambda_4$ are wavelengths of the first light beam, third light beam and the fourth light beam added to the optical path, respectively; $n_1, n_3, n_4$ are optical indices at wavelengths $\lambda_1, \lambda_3, \lambda_4$; $\Delta\phi_{34}(t)$ is a measured relative phase variation between the third and fourth light beams; and $\Delta\phi_{31}(t)$ is a measured relative phase variation between the third and first light beams.

Advantageously, the term $\Delta\phi_{34}(t)$ or $\Delta\phi_{31}(t)$ can be determined in a relatively cheap and simple way at the required accuracy.

Optionally, the optical path is parallel to a further adjacent optical path, wherein the first light beam and the second light beam are guided through the optical path and wherein the third light beam and the fourth light beam are guided through the further optical path, wherein the roundtrip time, optical path delay or phase difference between light at the third wavelength and the fourth wavelength are measured on light passing through the further optical path.

Instead of using an identical optical path, it is possible to use nearly identical optical paths. Two adjacent optical paths may be arranged next to each other (e.g. two optical fibers that run next to each other). Hence, parallel optical paths that physically extend next to each other may be arranged. Since the parallel optical paths are arranged side by side, substantially the same temperature effects may be experienced. For example, the temperature effects may induce path length variations. However, the parallel optical paths may have the same path length variations due to the (nearly) identical temperature effects.

Optionally, the optical path and the further adjacent optical path are encapsulated.

Optionally, the optical path and the further adjacent optical path are at least partially encapsulated in a same fiber duct.

Due to the encapsulation in the same fiber duct, it is possible to better equalize temperature effects.

According to an aspect, the invention provides for a system for estimating a relative phase difference between a first light beam and a second light beam guided through a shared/common optical path, the first light beam having a first wavelength and the second light beam having a second wavelength different from the first wavelength, the system comprising a measurement unit configured to perform one or more measurements for measuring a value indicative of the physical pathlength variation, and a computing unit configured to calculate the relative phase difference between the first light beam and the second light beam at a predetermined location of the optical path based on the value indicative of the physical pathlength variation.

The relative phase difference between light of two wavelengths over the same optical path is dominated by the optical pathlength variation. The shared optical path may for example be obtained by means of a shared optical fiber. According to the disclosure, the optical pathlength variation can be determined by performing either a path delay or roundtriptime measurement or by performing a phase shift measurement between one of the first or second light beams and another light beam with a different wavelength, or between two other light beams with different wavelengths.

According to an aspect, the invention provides for a method of controlling optical signals defining an optical path, wherein optical signals are phase-locked at a first location of the optical path up to a given time-varying offset, and wherein a relative phase difference estimated by performing the method according the disclosure to determine the time-varying offset so as to generate a phase-lock without offset at a second location of the optical path.

Optionally, two or more optical inputs coming from two or more distinct optical paths are phase synchronized.

The method and system according to the disclosure can be used for synchronization of light paths. For example, an interferometer may use two wavelengths of light, and it may be desired to output the light with known phases.

The invention can be employed for quantum interference, and various other quantum technology applications requiring phase synchronization of light beams.

According to an aspect, the invention provides for a system of controlling optical signals defining an optical path, wherein optical signals are phase-locked at a first location of the optical path up to a given time-varying offset, and wherein a relative phase difference estimated utilizing a system according to the disclosure to determine the time-varying offset so as to generate a phase-lock without offset at a second location of the optical path.

According to an aspect or example, given an optical path where the relative phase of light with two wavelengths $\lambda_1, \lambda_2$ is relevant, the invention provides for an estimator where the physical pathlength variation is estimated by either measuring or estimating either the optical path delay at wavelength $\lambda_{forward}$, or roundtrip time with wavelengths $\lambda_{forward}, \lambda_{backward}$ of said optical path.

According to an aspect or example, given an optical path where the relative phase of light with two wavelengths $\lambda_1, \lambda_2$ is relevant, the invention provides for an estimator where two (or one, respectively) wavelengths $\lambda_3, \lambda_4$ ($\lambda_3$, respectively) are added to the optical path and the relative phase variation $\Delta\phi_{34}(t)$ ($\Delta\phi_{31}(t)$, respectively) between light at wavelengths $\lambda_3, \lambda_4$ (or $\lambda_3, \lambda_1$) is measured. This measurement allows to compute the phase variation between the optical waves at wave-

lengths $\lambda_1, \lambda_2$ using

$$\Delta\phi(t) = \frac{\frac{n_1}{\lambda_1} - \frac{n_2}{\lambda_2}}{\frac{n_3}{\lambda_3} - \frac{n_4}{\lambda_4}} \Delta\phi_{34}(t)$$

(or

$$\Delta\phi(t) = \frac{\frac{n_1}{\lambda_1} - \frac{n_2}{\lambda_2}}{\frac{n_3}{\lambda_3} - \frac{n_1}{\lambda_1}} \Delta\phi_{31}(t)$$

, respectively).

Optionally, the optical path delay variation, roundtrip time variation or measurable relative phase variation $\Delta\phi_{34}(t)$ or $\Delta\Phi_{31}(t)$, is measured at a physically distinct but close optical path, such that temperature effects and pathlength variations between both paths are close.

Optionally, the optical path is an optical fiber, and the measurement is performed at a different fiber that is encapsulated in the same fiber duct.

Optionally, phase estimation gain is derived by analytical expressions

$$\Delta\phi(t) = 2\pi \left( \frac{n_1}{\lambda_1} - \frac{n_2}{\lambda_2} \right) \Delta L(t)$$

and either

$$\Delta L(t) = \frac{c}{n_{forward}} \Delta T(t)$$

or $\Delta L(t) =$

$$\frac{c}{n_{forward} + n_{backward}} \Delta T^{rt}(t)$$

.

Optionally, the optical signals at the entrance (exit) points of the fiber are phase-locked, and the generated estimation of said claims is used to offset the phase-lock, such that an effective phase-lock at the other side of the optical path, i.e. exit (entrance) point of the optical path, respectively, is achieved.

It will be appreciated that any of the aspects, features and options described in view of the methods apply equally to the systems and the described devices. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of an embodiment of a shared optical path; and
Fig. 2 shows a schematic diagram of an embodiment of a system.

DETAILED DESCRIPTION

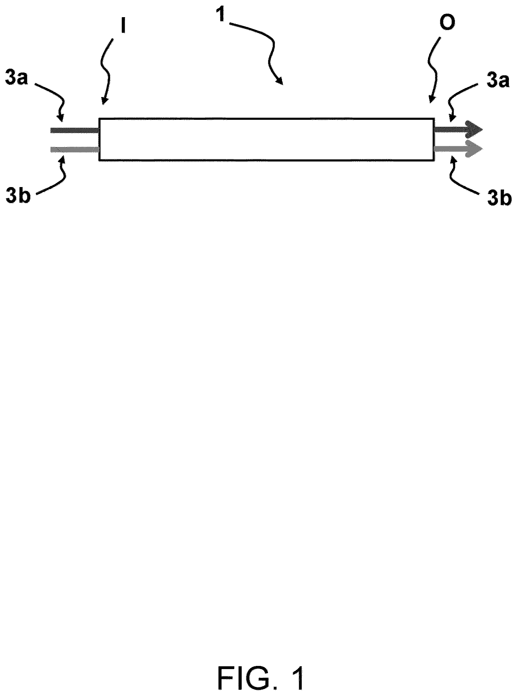

Fig. 1 shows a schematic diagram of an embodiment of a shared optical path 1. The shared optical path 1 may for instance be a shared optical fiber. The phase difference between entry and exit position of light travelling through the optical path is wavelength dependent. Hence, when different light beams 3a, 3b with different wavelengths are guided through the same optical path 1, then they will have a different phase difference over the fiber as a result of the wavelengths of the different light beams.

A system can be used for estimating a relative phase difference between a first light beam 3a and a second light beam 3b guided through the optical path 1. The first light beam 3a has a first wavelength and the second light beam has a second wavelength different from the first wavelength. The system comprises a measurement unit configured to perform one or more measurements for measuring a value indicative of the physical pathlength variation, and a computing unit configured to calculate the relative phase difference between the first light beam 3a and the second light beam 3b at a predetermined location of the optical path based on the value indicative of the physical pathlength variation.

When the phase relation between two wavelengths at input I (or output O) are known, the phase relation at output O (or input I) can be estimated according to the method of the disclosure. The relative phase variation between the first light beam 3a and the second light beam 3b is induced by optical pathlength variation that is measured. The phase variation in a shared optical path 1 can be determined via a runtime or roundtrip time measurement, or by employing one or more additional light beams with different wavelengths and measure the acquired phase variation of those (since phase variation ~ frequency difference). If the optical path is obtained by means of an optical fiber, a nearby fiber (e.g. in same optical duct) may be used for the measurement in some examples.

The disclosure provides for a method and system for improved estimation of phase difference between two optical channels induced by optical latency variations. Advantageously, a relative phase difference between the first light beam and a second light beam (cf. synchronization) can be compensated for with limited hardware complexity, even for relatively long optical paths.

The estimation of the relative phase difference may be needed in various applications, such as for instance in interferometers with multiple wavelengths of light.

Another application is quantum technology. For instance, the system can be employed in quantum interference or quantum communication (e.g. quantum internet) applications, where quantum information is to be compared. In some examples, the system can be utilized in optical phase synchronization of single photons by achieving a phase lock, up to an offset given by the relative phase difference estimated by the system, for a different wavelength using higher optical powers.

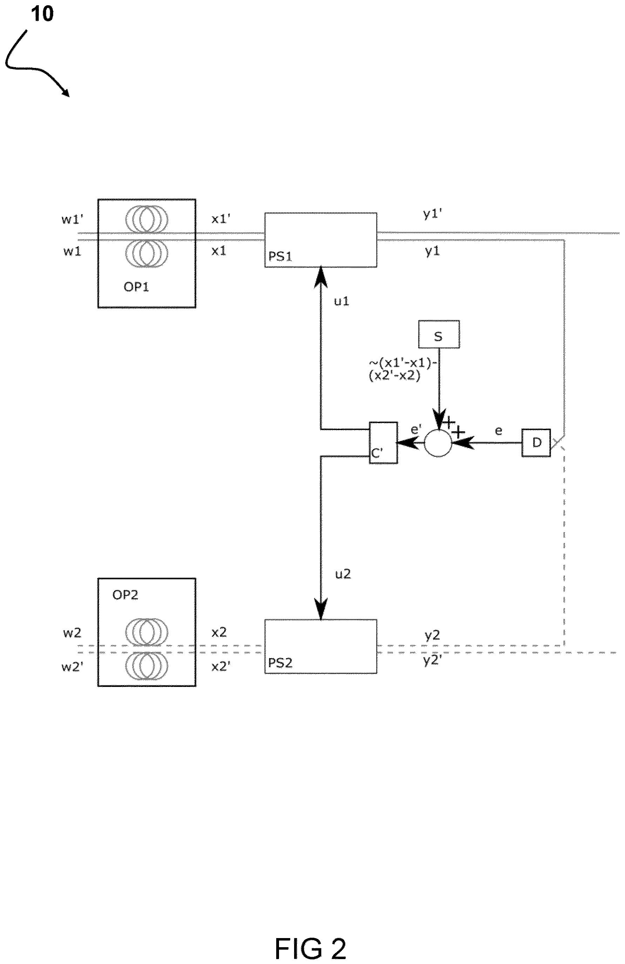

Fig. 2 shows a schematic diagram of an embodiment of a system 10 for controlling optical signals defining an optical path. In the shown example, optical signals are phase-locked at a first location of the optical path up to a given time-varying offset. A relative phase difference is estimated by employing a system according to the disclosure, wherein a first light beam with a first wavelength and a second light beam with a second wavelength different from the first wavelength is used, the system comprising a measurement unit configured to perform one or more measurements for measuring a value indicative of the physical pathlength variation, and a computing unit configured to calculate the relative phase difference between the first light beam and the second light beam at a predetermined location of the optical path based on the value indicative of the physical pathlength variation. This estimation is performed in order to determine the time-varying offset so as to generate a phase-lock without offset at a second location of the optical path.

The system 10 is configured to perform synchronization of y1 and y2 at detector D up to some synchronization offset. In this example, w1 and w1' are phase-locked. A difference between estimates of relative phase variations between y1 and y2 can be used as a synchronization feedback setpoint S. An estimate setpoint S is added to the synchronization in order to achieve synchronization of y1' and y2'.

The phase difference between optical channels may be induced by phase or frequency shifters, such as AOMs, EOMs and fiberstretchers. Advantageously, according to the disclosure, fully optical compensation for phase difference between y1 and y1' becomes feasible over large range without the need to compensate the full length variation of the optical paths.

For both the examples shown in fig. 1 and fig. 2, when light with two wavelengths $\lambda_1,\lambda_2$ passes through the same physical path, physical pathlength variations, e.g. caused by thermal effects, introduce a relative phase difference between two wavelengths. This relative phase difference $\Delta\phi$ can be given by:

$$\Delta\phi(t) = 2\pi \left(\frac{n_1}{\lambda_1} - \frac{n_2}{\lambda_2}\right) \Delta L(t) \ (1)$$

with $n_1$, $n_2$ the optical indices at wavelengths $\lambda_1,\lambda_2$ of the uniform medium, respectively, and $\Delta L(t)$ is the physical pathlength variation.

For light paths where temperature effects induce large physical pathlength variations, or large optical frequency differences, this relative phase shift can be significant in e.g. phase-locking applications such that estimation and compensation is desired.

By measuring either the optical path delay variation $\Delta T(t)$ at wavelength $\lambda_{forward}$, or roundtrip time variation $\Delta T^{rt}(t)$ with wavelengths $\lambda_{forward},\lambda_{backward}$, the physical pathlength variation can be computed with

$$\Delta L(t) = \frac{c}{n_{forward}} \Delta T(t), (2)$$

or

$$\Delta L(t) = \frac{c}{n_{forward} + n_{backward}} \Delta T^{rt}(t) \ (3)$$

with $n_{forward}, n_{backward}$ the optical indices at wavelengths $\lambda_{forward}, \lambda_{backward}$. Substitution in (1) yields a relative phase difference estimation, that gives an estimation of the relative phase difference based on path delay measurement or roundtriptime measurement.

Additionally or alternatively, in advantageous examples, it is possible to use (1) directly by adding additional wavelengths and measuring the phase variation between these two wavelengths. This way, an estimation is devised where the wavelengths $\lambda_3,\lambda_4$ are added to the optical path and the relative phase variation $\Delta\phi_{34}(t)$ between light at wavelengths $\lambda_3,\lambda_4$ is measured. With $n_3$, $n_4$ the optical indices at wavelengths $\lambda_3,\lambda_4$, it follows from (1) that

$$\Delta L(t) = \frac{\Delta\phi_{34}(t)}{2\pi \left(\frac{n_3}{\lambda_3} - \frac{n_4}{\lambda_4}\right)},$$

Such that (1) yields the estimation

$$\Delta\phi(t) = \frac{\frac{n_1}{\lambda_1} - \frac{n_2}{\lambda_2}}{\frac{n_3}{\lambda_3} - \frac{n_4}{\lambda_4}} \Delta\phi_{34}(t) \ (4)$$

In some applications, $\lambda_4$ can be selected equal to $\lambda_1$, such that only 1 additional wavelength needs to be added in the optical path.

Phase synchronization (phase locking) of two optical inputs coming from two distinct optical paths is instrumental in applications including interferometry using multiple lasers, coherent detection, or quantum interference with phasesensitive quantum information. Two optical waves, at given points, with wavelengths $\lambda_a,\lambda_b$ are phase synchronized when their phase difference $\Delta\phi(t)$ is given by

$$\delta\phi(t) = 2\pi c \left(\frac{1}{\lambda_a} - \frac{1}{\lambda_b}\right) t + \psi_0$$

with some fixed $\psi_0$ and c the speed of light. When this phase synchronization cannot be achieved by feedback of the measured phase error between the input signals at the wavelength of interests (primary wavelengths, i.e. $\lambda_a,\lambda_b$), secondary wavelengths can be used to achieve this feedback, provided that the primary and secondary wavelengths are phase-locked at some point, and both wavelengths experience the same phase distortions after this point. However, optical pathlength variations as discussed in the above induce a phase difference between both wavelengths. Estimation of this phase difference allows to compensate for this effect and enables phase-locking of the primary wavelengths.

In some examples, the optical signals at the entrance (exit) points of the fiber are phase-locked, and the generated estimation of according to the disclosure is used to offset the phase-lock, such that an effective phase-lock at the other side of the optical path, i.e. exit (entrance) point of the optical path, respectively, is achieved. Fig. 2 shows an exemplary scheme of optical synchronization between y1' and y2', with optical signals in grey, electronic or digital signals in black, optical paths OP1 and OP2 where length variations may occur, phase actuators PS1 and PS2, Control logic C', phase variation estimator S and detector D.

In this example, light synchronization is performed between optical output with phases y1' and y2', wherein each optical input contains 2 wavelengths, with phases w1 and w1' (or w2 and w2', respectively), where the phase difference between w1 and w1' (or w2 and w2', respectively) are known, and long optical paths are present after either both, or one of the optical inputs, such that after the optical path the optical phases are given by x1 and x1' (or x2 and x2'), respectively. Herein, u1 (or u2, respectively) consists of an optical phase shift applied at an actuator PS1 on both x1 and x1', (or applied at PS2 on x2 and x2', respectively) to generate the optical signals with phases y1 and y1' (or y2 and y2'). The signals u1, u2 are devised by a feedback controller C' from an error signal e' generated by adding the estimation x1'-x1 and subtracting the estimation x2'-x2 generated, by performing the method of the disclosure, to a conventional synchronization error e measured via interference of y1 and y2 at detector D. Advantageously, the phase difference can be determined in a robust and effective way, and a relatively small term can be obtained that is easy to offset. By adding the estimation of the phase difference as a setpoint in the controller, it is possible to actively synchronize optical paths in an advantageous way.

The system of the disclosure enables to perform compensation for relative phase difference between a first light beam and a second light beam (cf. synchronization) with an improved dynamic range. Synchronization can be achieved with a limited hardware complexity. Phase synchronization and/or quantum interference can be achieved for longer optical paths.

It will be appreciated that various types of actuators may be used. In some examples, an acoustic-optical modulator is employed for inducing phase shifts. In some alternative examples, an electrical-optical modulator is employed. It is also possible to use other actuators, for example fiber stretchers.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1.    A method for estimating a relative phase difference between a first light beam and a second light beam guided through a common optical path, the first light beam having a first wavelength and the second light having a second wavelength different from the first wavelength, wherein one or more measurements are performed to measure a value indicative of the physical pathlength variation, and wherein the relative phase difference between the first light beam and the second light beam at a predetermined location of the optical path is determined based on the value indicative of the physical pathlength variation.

2. The method according to claim 1, wherein the value indicative of the physical pathlength variation is determined by measuring an optical path delay of the optical path.

3. The method according to claim 1, wherein the value indicative of the physical pathlength variation is determined by measuring a roundtrip time of the optical path.

4. The method according to claim 1, wherein a third light beam with a third wavelength being different from the first and second wavelengths is guided through the optical path, and wherein the value indicative of the physical pathlength is determined based on a relative phase difference between the third light beam and a further light beam guided through the optical path.

5. The method according to claim 4, wherein the further light beam is a fourth light beam additionally guided through the optical path, wherein the fourth light beam has a wavelength different from the first, second and third wavelengths.

6. The method according to claim 4, wherein the further light beam corresponds to the first light beam or the second light beam.

7. The method according to any one of the preceding claims, wherein relative phase difference variation $\Delta\phi(t)$ is calculated based on the following relationship:

$$\Delta\phi(t) = 2\pi \left( \frac{n_1}{\lambda_1} - \frac{n_2}{\lambda_2} \right) \Delta L(t),$$

wherein $n_1, n_2$ are the optical indices of medium at the first and second wavelengths $\lambda_1, \lambda_2$, respectively, and $\Delta L(t)$ is the physical pathlength variation.

8. The method according to claim 7, wherein an optical path delay variation $\Delta T(t)$ is measured at wavelength $\lambda_{forward}$ such as to determine the physical pathlength variation $\Delta L(t)$ based on the following relationship:

$$\Delta L(t) = \frac{c}{n_{forward}} \Delta T(t),$$

wherein $n_{forward}$ is an optical index at wavelength $\lambda_{forward}$.

9. The method according to claim 7, wherein a roundtrip time variation $\Delta T^{rt}(t)$ is measured at wavelengths $\lambda_{forward}, \lambda_{backward}$ such as to determine the physical pathlength variation $\Delta L(t)$ based on the following relationship:

$$\Delta L(t) = \frac{c}{n_{forward} + n_{backward}} \Delta T^{rt}(t)$$

wherein $n_{forward}, n_{backward}$ are optical indices at wavelengths $\lambda_{forward}, \lambda_{backward}$.

10. The method according to any one of the claims 4-7, wherein the physical pathlength variation is determined based on at least one of the following relationships:

$$\Delta L(t) = \frac{\Delta\phi_{34}(t)}{2\pi \left( \frac{n_3}{\lambda_3} - \frac{n_4}{\lambda_4} \right)},$$

$$\Delta L(t) = \frac{\Delta\phi_{31}(t)}{2\pi \left( \frac{n_3}{\lambda_3} - \frac{n_1}{\lambda_1} \right)},$$

wherein $\lambda_1, \lambda_3, \lambda_4$ are wavelengths of the first light beam, third light beam and the fourth light beam added to the optical path, respectively; $n_1, n_3, n_4$ are optical indices at wavelengths $\lambda_1, \lambda_3, \lambda_4$; $\Delta\phi_{34}(t)$ is a measured relative phase variation between the third and fourth light beams; and $\Delta\varPhi_{31}(t)$ is a measured relative phase variation between the third and first light beams.

11. The method according to any one of the preceding claims, wherein the optical path is parallel to a further adjacent optical path, wherein the first light beam and the second light beam are guided through the optical path and wherein the third light beam and the fourth light beam are guided through the further optical path, wherein the roundtrip time, optical path delay or phase difference between light at the third wavelength and the fourth wavelength are measured on light passing through the further optical path.

12. The method according to claim 11, wherein the optical path and the further adjacent optical path are at least partially encapsulated in a same fiber duct.

13. A system for estimating a relative phase difference between a first light beam and a second light beam guided through a common optical path, the first light beam having a first wavelength and the second light beam having a second wavelength different from the first wavelength, the system comprising a measurement unit configured to perform one or more measurements for measuring a value indicative of the physical pathlength variation, and a computing unit configured to calculate the relative phase difference between the first light beam and the second light beam at a predetermined location of the optical path based on the value indicative of the physical pathlength variation.

14. A method of controlling optical signals defining an optical path, wherein optical signals are phase-locked at a first location of the optical path up to a given time-varying offset, and wherein a relative phase difference estimated by performing the method according to any one of the preceding claims 1-12 to determine the time-varying offset so as to generate a phase-lock without offset at a second location of the optical path.

15. The method according to claim 14, wherein two or more optical inputs coming from two or more distinct optical paths are phase synchronized.

FIG. 1

**10**

## FIG 2

Europäisches
Patentamt

European
Patent Office

Office européen
des brevets

# EUROPEAN SEARCH REPORT

**Application Number**

EP 23 16 6396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Thurner Klaus: "Position sensing using a fiber-optic Fabry-Pérot interferometer", , 14 May 2018 (2018-05-14), XP093012981, Retrieved from the Internet: URL:https://mediatum.ub.tum.de/doc/1292904 /1292904.pdf [retrieved on 2023-01-11] | 1-3,7,13 | INV. G01B9/02001 G01B9/02055 |
| A | * paragraph [5.1.1.1]; figure 5.1 * ----- | 4-6, 10-12, 14,15 | |
| A | US 11 223 419 B1 (PITTALUGA MIRKO [GB] ET AL) 11 January 2022 (2022-01-11) * column 11, line 12 - line 38; figures 1-3B * ----- | 1-15 | |
| A | US 5 280 376 A (TAKAHASHI AKIRA [JP] ET AL) 18 January 1994 (1994-01-18) * figure 6 * ----- | 1-15 | |
| | | | TECHNICAL FIELDS SEARCHED (IPC) |
| | | | G01B G01J H04B |

The present search report has been drawn up for all claims

| Place of search | Date of completion of the search | Examiner |
|---|---|---|
| Munich | 21 September 2023 | Braun, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                            

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6396

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | | Publication date | Patent family member(s) | | | Publication date |
|---|---|---|---|---|---|---|
| US 11223419 | B1 | 11-01-2022 | GB | 2602353 | A | 29-06-2022 |
| | | | JP | 7322084 | B2 | 07-08-2023 |
| | | | JP | 2022101425 | A | 06-07-2022 |
| | | | US | 11223419 | B1 | 11-01-2022 |
| US 5280376 | A | 18-01-1994 | DE | 69217414 | T2 | 28-08-1997 |
| | | | EP | 0515919 | A2 | 02-12-1992 |
| | | | US | 5280376 | A | 18-01-1994 |

EPO FORM P0459

For more details about this annex : see Official Journal of the European Patent Office, No. 12/82